# FASCICULE DE BREVET EUROPEEN

(11) **EP 2 027 981 B1**
(45) Date de publication et mention de la délivrance du brevet: **09.03.2011**
(21) Numéro de dépôt: 08290792.4
(22) Date de dépôt: 20.08.2008
(51) Int. Cl.: B29C 45/02, B29C 45/04, B60J 1/17, B60J 5/04, B60J 10/04, B60J 10/06

(54) **Procédé de fabrication d'un module supérieur d'ouvrant pour un vitrage d'un véhicule, et un tel module**
Herstellungsverfahren des oberen Moduls eines Öffnungsflügels für ein Fahrzeugfenster und ein solches Modul
Method of manufacturing a top wing module for a vehicle window, and such a module

(30) Priorité: 24.08.2007 FR 0706003
(43) Date de publication de la demande: 25.02.2009
(73) Titulaire: Hutchinson, 75008 Paris (FR)
(72) Inventeur: Coldre, Laurent, 45390 La Neuville sur Essonne (FR); Laude, Olivier, 45200 Amilly (FR); Ciolczyk, Jean-Pierre, 45200 Montargis (FR)
(74) Mandataire: Bolinches, Michel Jean-Marie

(56) Documents cités:
- EP-A- 0 308 377
- EP-A- 0 512 673
- EP-A- 0 529 815
- EP-A- 0 587 428
- EP-A- 1 029 729
- EP-A- 1 232 887
- WO-A-02/06070
- GB-A- 2 272 469

## Description

La présente invention concerne un procédé de fabrication d'un module supérieur d'ouvrant destiné à être monté à la périphérie d'un vitrage d'un véhicule, et un tel module supérieur d'ouvrant de type comportant notamment un cadre rigide et une garniture d'étanchéité souple. L'invention s'applique en particulier à un ouvrant pour vitrage latéral coulissant de véhicule automobile, cependant elle peut égaiement s'appliquer à d'autres types d'ouvrants tels que ceux utilisés dans les domaines aéronautique, ferroviaire ou naval.

De manière connue, les modules d'ouvrants, notamment pour véhicules automobiles, sont constitués d'un ensemble hétérogène d'un nombre élevé de pièces avec des fonctions, des tailles et des matériaux différents, ce qui requiert une multitude d'opérations de fabrication et d'assemblage de ces modules. On peut décomposer les modules d'ouvrants pour portes latérales de véhicule automobile en deux sous-modules qui sont séparés entre eux par la ligne dite de ceinture de caisse, typiquement visualisable aux environs des lécheurs horizontaux de vitrage, et qui comprennent deux modules respectivement supérieur et inférieur d'ouvrant.

Concernant le module supérieur d'ouvrant, il comporte en général un cadre rigide de porte usuellement métallique, sur lequel est montée une garniture souple d'étanchéité et de guidage du vitrage mobile en un matériau élastomère pourvu ou pas d'une armature de renforcement. Un tel cadre de porte peut être par exemple réalisé par l'assemblage de tôles embouties, de profilés métalliques extrudés et déformés par action mécanique (e.g. cintrage, galbage ou hydroformage) ou encore de pièces métalliques injectées ou coulées. Ces cadres présentent notamment l'inconvénient d'être fabriqués indépendamment des garnitures d'étanchéité/ guidage correspondantes, ce qui implique un nombre relativement élevé d'opérations pour la fabrication des modules supérieurs correspondants et donc une accumulation de dispersions dimensionnelles pour le produit fini.

Le document GB-A-2 272 469 présente un procédé selon le préambule de la revendication 1 ainsi qu'un module selon le préambule de la revendication 6.

Le document GB-A-2 272 469 présente un module supérieur d'ouvrant pour porte latérale de véhicule automobile dont le cadre rigide est non pas métallique, mais moulé en un matériau thermoplastique, et dont la garniture d'étanchéité et de guidage en caoutchouc est solidarisée avec ce cadre via un surmoulage du cadre moulé et préalablement revêtu d'un agent promoteur d'adhésion par le caoutchouc de la garniture, dans une presse réalisant la vulcanisation de ce caoutchouc suite à ce surmoulage.

Un inconvénient majeur du procédé de fabrication décrit dans ce document réside dans la nécessité de mettre en oeuvre deux étapes successives de moulage du cadre et de surmoulage avec vulcanisation, ce qui implique un coût de fabrication relativement élevé. Un autre inconvénient de ce procédé réside dans la nécessité d'utiliser un agent promoteur d'adhésion pour solidariser la garniture avec le cadre.

Un but de la présente invention est de proposer un procédé de fabrication d'un module supérieur d'ouvrant destiné à être monté à la périphérie d'un vitrage d'un véhicule, en particulier un vitrage latéral coulissant de véhicule automobile, ce module comprenant un cadre moulé à base d'au moins un polymère thermoplastique et une garniture d'étanchéité moulée solidarisée avec ledit cadre et à base d'au moins un élastomère, qui permette de remédier aux inconvénients précités. A cet effet , l'invention propose un procédé ayant les caractéristiques de la revendication 1

ainsi qu'un module ayant les caractéristiques de la revendication 6. Un module supérieur d'ouvrant selon l'invention comprend une étape de moulage, par multi-injection mise en oeuvre dans un moule à plateau mobile, par exemple coulissant, ou bien mise en oeuvre via un moulage par transfert, de matériaux destinés à former ledit cadre et ladite garniture qui sont injectés successivement, ledit élastomère étant un élastomère thermoplastique (TPE) compatible avec ledit polymère thermoplastique, pour l'obtention de ce module formé d'un seul tenant dans lequel ledit cadre moulé est évidé sur toute sa longueur.

Par « multi-injection », on entend de manière connue dans la présente description l'injection successive, dans des empreintes distinctes, de matières plastiques ou pouvant être mises en oeuvre comme telles. On parle ainsi de bi-injection ou de tri-injection dans le cas de l'injection successive de deux ou trois de ces matières.

On notera que ce module monobloc selon l'invention présente l'avantage de pouvoir être réalisé par une étape unique de multi-injection, sans nécessité d'utiliser un agent promoteur d'adhésion à l'interface entre le cadre et la garniture et surtout sans étape supplémentaire de vulcanisation de la garniture élastomère, contrairement au document précité GB-A-2 272 469, ce qui représente une réduction substantielle du nombre de pièces et d'opérations de fabrication requises et, par conséquent, du coût global de fabrication et d'assemblage du module.

Avantageusement, ce module peut être adapté pour recevoir le vitrage de manière mobile dans ledit cadre, et il est alors tel que ladite garniture comprend une lèvre de léchage du vitrage et une lèvre d'interface avec la carrosserie du véhicule assurant l'étanchéité de l'ouvrant avec cette carrosserie. Cette garniture est ainsi une garniture d'étanchéité et de guidage.

De préférence, ledit cadre est à base d'un alliage de polyesters, tel qu'un alliage polyéthylène téréphtalate (PET) - polybutylène téréphtalate (PBT), et l'élastomère thermoplastique utilisé pour la garniture d'étanchéité/ guidage est choisi dans le groupe constitué par les vulcanisats thermoplastiques (TPV) et les copolymères à blocs styréniques (TPS).

A titre encore plus préférentiel, ladite garniture peut être à base d'un vulcanisat thermoplastique (TPV) comprenant un mélange :
- d'un élastomère réticulé, qui est synthétisé par un catalyseur métallocène et qui appartient au groupe constitué par les terpolymères éthylène/propylène/diène (EPDM) et les polyoctènes, et
- d'une polyoléfine greffée, telle qu'un polypropylène.

En variante, la garniture d'étanchéité/ guidage peut être à base d'un copolymère à blocs styréniques (TPS) qui est par exemple de type à blocs styrène/ butadiène/ styrène (SBS) ou éthylène/ butylène/ styrène (SEBS).

On notera que ladite garniture peut éventuellement comprendre en outre au moins un agent compatibilisant (en plus des autres ingrédients habituellement utilisés dans les garnitures d'étanchéité, tels que des charges, des plastifiants, etc.), de sorte à favoriser son adhésion audit cadre sans couche interfaciale d'adhérisation.

Selon un mode préférentiel de réalisation de l'invention, immédiatement après l'injection du matériau thermoplastique destiné à former le cadre, on évide ce cadre injecté sur toute sa longueur via une injection à travers ce dernier d'eau liquide ou d'un gaz sous pression et à une température inférieure à celle de l'injection du matériau du cadre, pour former un évidement en son centre par compactage périphérique de ce matériau.

On notera que cet évidement du cadre combiné au matériau thermoplastique suffisamment rigide qui le constitue permet d'augmenter sensiblement son ratio rigidité/ poids (i.e. de minimiser son poids pour une rigidité donnée), tout en diminuant la quantité de matière thermoplastique injectée pour l'obtention du cadre.

Il convient également de noter que ce façonnage par moulage du cadre monobloc ainsi évidé est avantageusement réalisé en un temps très bref et à une température très inférieure à la température de vulcanisation utilisée dans le document GB-A-2 272 469.

Selon une autre caractéristique de l'invention, ledit cadre présente essentiellement deux portions avant et arrière sensiblement verticales qui sont reliées entre elles par une portion supérieure sensiblement horizontale et entre lesquelles le vitrage est monté coulissant en direction ou en s'éloignant de ladite portion supérieure, et l'étape de moulage par multi-injection peut comprendre avantageusement la formation d'une piste de guidage du vitrage coulissant dans chacune desdites portions avant et arrière et, suite à cette étape de moulage, on insère alors dans ces pistes des moyens de guidage du vitrage qui sont fixés à une face intérieure de ce dernier et qui sont montés coulissants dans la piste correspondante pour assurer un guidage axialement déporté du vitrage lors de son coulissement dans ledit cadre.

Par « guidage axialement déporté », on entend dans la présente description un déport dans la direction Y de la largeur du véhicule (i.e. perpendiculairement au plan du vitrage équipant la porte latérale correspondante du véhicule).

Avec ce guidage déporté du vitrage selon ce mode de réalisation de l'invention, on notera que ce n'est pas la lèvre de léchage qui guide le vitrage lors de son coulissement dans le cadre de porte, comme cela est décrit dans le document GB-A-2 272 469 et dans le cas des joints de coulisse classiques, mais que ce sont lesdits moyens de guidage rapportés de manière mobile sur ce cadre, comme cela sera développé ci-après.

Selon une autre caractéristique de l'invention, le procédé de fabrication de ce module supérieur d'ouvrant peut comprendre en outre un raccordement de ce dernier à un module inférieur de cet ouvrant destiné à se trouver en dessous du vitrage, par exemple via un surmoulage préalable d'inserts métalliques constitutifs du module inférieur par les matériaux injectés dudit cadre et de ladite garniture destinés à former ce module supérieur.

Un module supérieur d'ouvrant selon l'invention, qui est destiné à être monté en périphérie d'un vitrage de véhicule, en particulier un vitrage latéral coulissant de véhicule automobile, comprend un cadre moulé à base d'au moins un polymère thermoplastique et une garniture d'étanchéité moulée solidarisée avec ce cadre et à base d'au moins un élastomère.

Selon l'invention, ce module est moulé par multi-injection de matériaux formant ledit cadre et ladite garniture, dans laquelle cet élastomère est un élastomère thermoplastique (TPE) compatible avec ce polymère thermoplastique, pour l'obtention de ce module formé d'un seul tenant et sans couche interfaciale d'adhérisation, le cadre présentant un évidement longitudinal lui conférant une structure creuse sur toute sa longueur.

Comme indiqué ci-dessus, ce module supérieur d'ouvrant est avantageusement adapté pour recevoir le vitrage de manière mobile dans le cadre, la garniture comprenant alors une lèvre continue de léchage du vitrage - cette lèvre faisant office de lécheur sur tout le pourtour du module - et une lèvre d'étanchéité avec la carrosserie du véhicule.

Selon une autre caractéristique de l'invention, ladite garniture d'étanchéité est avantageusement dépourvue d'armature de renforcement.

On notera que le produit fini constitué par le module supérieur d'ouvrant selon l'invention est avantageusement recyclable à 100 %, contrairement à celui du document précité GB-A-2 272 469, qui requiert une séparation mécanique des matières.

Selon une autre caractéristique de l'invention présentée ci-dessus en relation avec le procédé de fabrication du module supérieur d'ouvrant, où celui-ci incorpore le vitrage et où le cadre présente lesdites portions avant et arrière qui sont reliées entre elles par ladite portion supérieure et entre lesquelles le vitrage est monté coulissant, une piste de guidage du vitrage peut être formée dans chacune de ces portions avant et arrière, et dans chacune de ces pistes sont alors montés coulissants des moyens de guidage du vitrage fixés à une face intérieure de ce dernier pour assurer un guidage axialement déporté du vitrage dans le cadre.

Avantageusement, chaque piste de guidage peut présenter une section transversale en forme de U, ces moyens de guidage déporté comprenant des patins de section sensiblement en forme de U renversé dont une branche est montée coulissante dans la piste correspondante et dont l'autre branche est collée via sa face externe sur le vitrage.

On forme ainsi lors de l'étape de moulage du module deux pistes de guidage déporté du vitrage dans les deux portions avant et arrière respectives du cadre.

Selon une autre caractéristique particulièrement avantageuse de l'invention, ces deux pistes et ces moyens de guidage déporté sont agencés de telle manière que le vitrage n'entre en contact avec ladite lèvre de léchage lors de son coulissement vers la portion supérieure du cadre que lorsqu'il parvient à proximité immédiate de cette portion supérieure ou vient buter contre celle-ci en fin de coulissement.

Il est essentiel de noter ici que le guidage déporté du vitrage selon l'invention qui est procuré par ces pistes et ces moyens de guidage permet de remédier de manière satisfaisante aux inconvénients suivants qui sont relatifs aux guidages linéaires des vitrages dans les cadres des modules supérieurs existants (par exemple via des pions traversants ou des rails), et qui résultent du coulissement continu et permanent du vitrage sur la garniture d'étanchéité lorsque ce vitrage passe de la position baissée à la position haute adjacente à la portion supérieure du cadre, à savoir :
- des efforts de coulissement élevés,
- une abrasion prématurée de la garniture d'étanchéité,
- un bruit non négligeable à la manoeuvre, et
- une limitation des valeurs de « désaffleurement » du vitrage.

On notera ainsi que ce guidage déporté via les pistes de guidages formées sur le cadre selon l'invention permet de minimiser la résistance à l'abrasion de la lèvre de léchage de la garniture d'étanchéité solidaire de ce cadre, de simplifier la manoeuvre de coulissement du vitrage et d'améliorer le confort inhérent à cette manoeuvre pour l'opérateur.

Selon une autre caractéristique avantageuse de l'invention, ledit cadre est entièrement monté d'un même côté du vitrage correspondant à l'intérieur de ce dernier, de telle sorte que ce cadre est invisible de l'extérieur du véhicule équipé de ce module selon l'invention.

Il résulte de ce cadre caché à la vue un rehaussement de l'aspect extérieur du véhicule automobile équipé de tels modules supérieurs d'ouvrants.

Selon une autre caractéristique de l'invention, le vitrage peut être monté pivotant autour d'un axe longitudinal de l'ouvrant, la base inférieure de ce vitrage étant pourvue d'un système de raccordement à un dispositif de lève-vitre comportant deux liaisons mécaniques superposées et reliées entre elles par une articulation souple.

On notera ce montage pivotant de la base inférieure du vitrage permet de conférer une rigidité suffisamment élevée au couple lève-vitre / vitrage, et qu'il contribue également au guidage non linéaire selon l'invention du vitrage, de sorte que celui-ci n'entre en contact avec la lèvre de léchage lors de son coulissement vers la portion supérieure du cadre que lorsqu'il parvient à proximité immédiate ou au contact de cette portion.

D'autres caractéristiques, avantages et détails de la présente invention ressortiront à la lecture de la description suivante de plusieurs exemples de réalisation de l'invention, donnés à titre illustratif et non limitatif, ladite description étant réalisée en référence avec les dessins joints, parmi lesquels :
la figure 1 est une vue en perspective d'un module supérieur d'ouvrant latéral selon l'invention pour véhicule automobile qui est adapté pour recevoir un vitrage coulissant,
la figure 2 est une vue schématique en coupe transversale, selon le plan II-II de la figure 1 et selon un mode préférentiel de l'invention, de la portion supérieure de ce module équipé du vitrage correspondant dans une position où l'ouvrant est monté contre la carrosserie du véhicule,
la figure 3 est une vue schématique partielle en coupe transversale, selon le plan III-III de la figure 1 et selon un mode préférentiel de l'invention, des deux portions avant et arrière de ce module équipé du vitrage correspondant, et
la figure 4 est une vue schématique de principe en coupe axiale des principaux éléments d'un dispositif de lève-vitre raccordé à un système articulé selon l'invention pour le pivotement du vitrage autour d'un axe longitudinal parallèle à sa base inférieure.

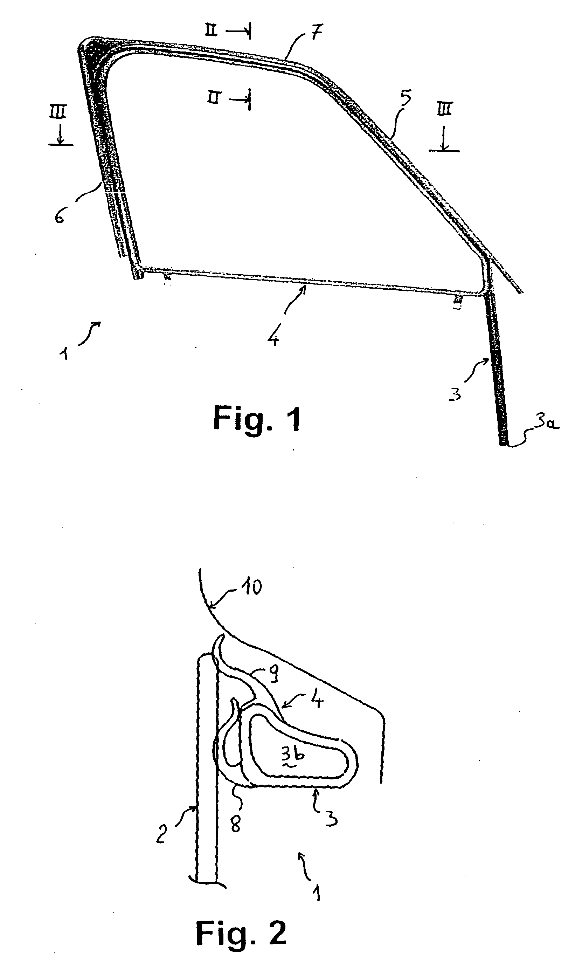

Le module supérieur d'ouvrant 1 selon l'invention qui est illustré à la figure 1 est adapté pour être monté à la périphérie d'un vitrage latéral coulissant 2 de véhicule automobile (ce vitrage 2 est visible aux figures 2 à 4). Le module 1 comprend un cadre rigide 3 moulé à base d'un polymère thermoplastique, tel qu'un alliage PET-PBT, et une garniture souple 4 moulée d'étanchéité/ guidage du vitrage 2 solidarisée avec le cadre 3 et à base d'au moins un élastomère thermoplastique (TPE) compatible, tel qu'un vulcanisat thermoplastique (TPV) ou un élastomère thermoplastique styrénique (TPS). Selon l'invention, ce module 1 est obtenu d'un seul tenant par une unique étape de moulage par multi-injection (typiquement de bi-injection dans le cas de deux matériaux). On injecte à cet effet successivement, dans un moule de type à plateau mobile, par exemple coulissant, ou bien via un moulage par transfert, les deux matériaux respectivement destinés à former le cadre 3 et la garniture 4 qui sont à base du polymère et de l'élastomère thermoplastique précités.

Comme illustré aux figures 1 et 2, le cadre 3 présente à titre préférentiel une structure monobloc creuse (i.e. évidée en son centre) sur toute sa longueur, comprenant deux portions avant 5 et arrière 6 sensiblement verticales qui sont reliées en leur partie haute par une portion supérieure 7 sensiblement horizontale, et entre lesquelles le vitrage 2 est monté coulissant en direction ou en s'éloignant de cette portion supérieure 7. Le cadre 3 selon l'invention est entièrement monté du côté intérieur du vitrage 2, étant ainsi totalement invisible de l'extérieur du véhicule et améliorant de ce fait l'esthétique de ce dernier.

Cette structure évidée pour le cadre 3, par exemple injecté dans un moule à plateau mobile, est obtenue en mettant notamment en oeuvre les étapes successives suivantes :
a) on injecte dans une empreinte du moule le matériau thermoplastique destiné à former le cadre 3 ;
b) on injecte à travers et le long du cadre 3 ainsi injecté dans le moule, par l'extrémité 3a du cadre visible à la figure 1, de l'eau liquide ou un gaz sous pression et à une température inférieure à celle de l'injection du matériau thermoplastique, pour former un évidement 3b en son centre par compactage périphérique (i.e. sensiblement annulaire en section transversale) du matériau thermoplastique ; puis
c) on injecte dans une autre empreinte du moule le matériau élastomère thermoplastique destiné à former la garniture 4 d'étanchéité/ guidage.

La garniture 4 d'étanchéité/ guidage s'étend sur tout le pourtour du cadre 3 en étant solidarisée avec ce dernier du fait de la bi-injection précitée, et cette garniture 4 comprend une lèvre continue de léchage 8 du vitrage 2 et une lèvre d'étanchéité 9 avec la carrosserie 10 du véhicule, comme illustré aux figures 1 et 2.

Le montage du vitrage 2 dans le cadre 3 pourvu de la garniture 4 d'étanchéité/ guidage est réalisé classiquement par en dessous, du côté intérieur du cadre 3.

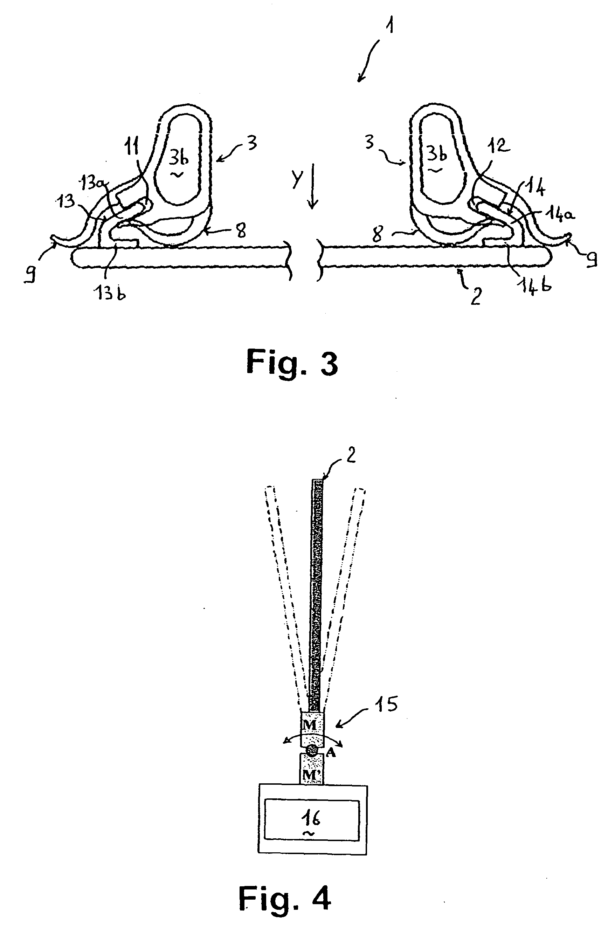

Egalement à titre préférentiel et en référence à la figure 3, l'étape de moulage par bi-injection comprend la formation d'une piste de guidage 11, 12 du vitrage coulissant 2 dans chacune des portions avant 5 et arrière 6 et, suite à cette étape de moulage, on insère dans ces deux pistes 11 et 12 des patins de guidage 13 et 14 du vitrage 2 qui sont collés à une face intérieure de ce dernier et qui sont montés coulissants dans la piste 11, 12 correspondante pour assurer un guidage axialement déporté (dans la direction Y du véhicule) du vitrage 2 lors de son coulissement dans le cadre 3.

Comme illustré à cette figure 3, chaque piste de guidage 11, 12 présente par exemple une section transversale en forme de U, et chaque patin 13, 14 une section sensiblement en forme de U renversé dont une branche 13a, 14a est montée coulissante dans la piste 11, 12 correspondante et dont l'autre branche 13b, 14b est collée via sa face externe sur le vitrage 2. De préférence, au moins deux patins de guidage 13 ou 14 sont montés coulissants dans l'une de ces pistes 11 ou 12 et au moins un troisième patin 14 ou 13 est monté coulissant dans l'autre piste 12 ou 11, pour l'obtention d'une stabilité par triangulation lors du guidage.

Chaque patin 13, 14 est avantageusement réalisé en une matière plastique injectée comprenant optionnellement une charge renforçante, et il peut être avantageusement pourvu d'un revêtement d'interface anti-friction dans sa zone destinée à coulisser au contact de la piste de guidage 11, 12.

Selon un aspect important de la présente invention, il convient de noter que ces moyens de guidage déporté 13, 14 (i.e. non linéaire) sont conçus pour que le vitrage 2 n'entre en contact avec la lèvre de léchage 8 lors de son coulissement vers la portion supérieure 7 du cadre 3 que lorsqu'il parvient à proximité immédiate de cette portion supérieure 7 ou vient buter contre celle-ci, minimisant ainsi la résistance à l'abrasion de cette lèvre de léchage 8 et simplifiant la manoeuvre de coulissement du vitrage 2.

Selon un aspect additionnel de l'invention illustré sommairement à la figure 4, le vitrage 2 peut être monté pivotant autour d'un axe longitudinal de l'ouvrant (sont visibles en pointillés à la figure 4 deux positions de ce même vitrage 2 suite à son pivotement), la base inférieure de ce vitrage 2 étant pourvue d'un système de raccordement 15 à un dispositif de lève-vitre 16 comportant deux liaisons mécaniques M et M' superposées et reliées entre elles par une articulation souple A. La liaison mécanique M relie le vitrage 2 à un support inférieur (non illustré) du vitrage 2 par collage ou vissage, par exemple, et l'autre liaison mécanique M' relie l'articulation A montée sous ce support de vitrage au dispositif de lève-vitre 16.

Ce dispositif de lève-vitre 16 pourvu d'un tel système de raccordement 15 contribue ainsi au guidage non linéaire selon l'invention du vitrage 2 coulissant, de sorte que celui-ci n'entre en contact avec la lèvre de léchage 8 que lorsqu'il parvient à proximité ou au contact de la portion supérieure 7 du cadre 3.

## Revendications

1. Procédé de fabrication d'un module supérieur d'ouvrant (1) destiné à être monté à la périphérie d'un vitrage (2) d'un véhicule, en particulier un vitrage latéral coulissant de véhicule automobile, ce module comprenant un cadre (3) moulé à base d'au moins un polymère thermoplastique et une garniture d'étanchéité (4) moulée solidarisée avec ledit cadre et à base d'au moins un élastomère, **caractérisé en ce qu'**il comprend une étape de moulage, mise en oeuvre par multi-injection dans un moule à plateau mobile, par exemple à plateau coulissant, ou bien mise en oeuvre via un moulage par transfert, de matériaux destinés à former ledit cadre et ladite garniture qui sont injectés successivement, ledit élastomère étant un élastomère thermoplastique (TPE) compatible avec ledit polymère thermoplastique, pour l'obtention de ce module formé d'un seul tenant dans lequel ledit cadre moulé est évidé sur toute sa longueur.

2. Procédé selon la revendication 1, le module (1) étant adapté pour recevoir le vitrage (2) de manière mobile dans ledit cadre (3), **caractérisé en ce que** ladite garniture (4) comprend une lèvre de léchage (8) du vitrage et une lèvre d'interface (9) avec la carrosserie (10) du véhicule assurant l'étanchéité de l'ouvrant avec cette carrosserie.

3. Procédé selon la revendication 1 ou 2, **caractérisé en ce que**, immédiatement après l'injection du matériau destiné à former ledit cadre, l'on évide ce cadre (3) injecté via une injection à travers ce dernier d'eau liquide ou d'un gaz sous pression et à une température inférieure à celle de l'injection du matériau du cadre, pour former un évidement (3b) en son centre par compactage périphérique de ce matériau.

4. Procédé selon une des revendications précédentes, ledit cadre (3) présentant essentiellement deux portions avant (5) et arrière (6) sensiblement verticales qui sont reliées entre elles par une portion supérieure (7) sensiblement horizontale et entre lesquelles le vitrage (2) est monté coulissant en direction ou en s'éloignant de ladite portion supérieure, **caractérisé en ce que** l'étape de moulage par multi-injection comprend la formation d'une piste de guidage (11, 12) du vitrage coulissant dans chacune desdites portions avant et arrière et **en ce que**, suite à cette étape de moulage, on insère dans ces pistes des moyens de guidage (13, 14) du vitrage qui sont fixés à une face intérieure de ce dernier et qui sont montés coulissants dans la piste correspondante pour assurer un guidage axialement déporté du vitrage lors de son coulissement dans ledit cadre.

5. Procédé selon une des revendications précédentes, **caractérisé en ce qu'**il comprend en outre un raccordement dudit module supérieur d'ouvrant (1) à un module inférieur de cet ouvrant destiné à se trouver en dessous du vitrage (2), par exemple via un surmoulage préalable d'inserts métalliques constitutifs de ce module inférieur par les matériaux injectés dudit cadre (3) et de ladite garniture (4) destinés à former ledit module supérieur.

6. Module supérieur d'ouvrant (1) destiné à être monté à la périphérie d'un vitrage (2) d'un véhicule, en particulier un vitrage latéral coulissant de véhicule automobile, ce module comprenant un cadre (3) moulé à base d'au moins un polymère thermoplastique et une garniture d'étanchéité (4) moulée solidarisée avec ledit cadre et à base d'au moins un élastomère, **caractérisé en ce que** ledit module est moulé par multi-injection de matériaux formant ledit cadre et ladite garniture, dans laquelle ledit élastomère est un élastomère thermoplastique (TPE) compatible avec ledit polymère thermoplastique, pour l'obtention de ce module formé d'un seul tenant, ledit cadre présentant un évidement (3b) longitudinal lui conférant une structure creuse sur toute sa longueur.

7. Module supérieur d'ouvrant (1) selon la revendication 6, le module étant adapté pour recevoir le vitrage (2) de manière mobile dans ledit cadre (3), **caractérisé en ce que** ladite garniture (4) comprend une lèvre continue de léchage (8) du vitrage, et une lèvre d'interface (9) avec la carrosserie (10) du véhicule assurant d'étanchéité de l'ouvrant avec cette carrosserie.

8. Module supérieur d'ouvrant (1) selon la revendication 6 ou 7 et incorporant le vitrage (2), ledit cadre (3) présentant essentiellement deux portions avant (5) et arrière (6) sensiblement verticales qui sont reliées entre elles par une portion supérieure (7) sensiblement horizontale et entre lesquelles le vitrage est monté coulissant en direction ou en s'éloignant de ladite portion supérieure, **caractérisé en ce qu'**une piste de guidage (11, 12) du vitrage coulissant est formée dans chacune desdites portions avant et arrière, et **en ce que** dans chacune de ces pistes sont montés coulissants des moyens de guidage (13, 14) du vitrage qui sont fixés à une face intérieure de ce dernier pour assurer un guidage axialement déporté du vitrage dans ledit cadre lors de son coulissement.

9. Module supérieur d'ouvrant (1) selon la revendication 8, **caractérisé en ce que** chaque piste de guidage (11, 12) présente une section transversale en forme de U, lesdits moyens de guidage déporté (13 et 14) comprenant des patins de section sensiblement en forme de U renversé dont une branche (13a, 14a) est montée coulissante dans la piste (11, 12) correspondante et dont l'autre branche (13b, 14b) est collée via sa face externe sur le vitrage (2).

10. Module supérieur d'ouvrant (1) selon les revendications 7 et 9, **caractérisé en ce que** lesdites pistes (11 et 12) et lesdits moyens de guidage déporté (13 et 14) sont agencés de telle manière que le vitrage (2) n'entre en contact avec ladite lèvre de léchage (8), lors de son coulissement vers ladite portion supérieure (7) dudit cadre (3), que lorsqu'il parvient à proximité immédiate de cette portion supérieure ou vient buter contre cette dernière en fin de coulissement.

11. Module supérieur d'ouvrant (1) selon une des revendications 6 à 10, **caractérisé en ce que** ladite garniture d'étanchéité (4) est dépourvue d'armature de renforcement.

12. Module supérieur d'ouvrant (1) selon une des revendications 6 à 11 et incorporant le vitrage (2), **caractérisé en ce que** ledit cadre (3) est entièrement monté d'un même côté du vitrage (2) correspondant à l'intérieur de ce dernier, de telle sorte que ce cadre soit invisible de l'extérieur du véhicule équipé de ce module.

13. Module supérieur d'ouvrant (1) selon une des revendications 6 à 12, **caractérisé en ce que** ledit élastomère thermoplastique est choisi dans le groupe constitué par les vulcanisats thermoplastiques (TPV) et les copolymères à blocs styréniques (TPS).

14. Module supérieur d'ouvrant (1) selon une des revendications 6 à 13, **caractérisé en ce que** ledit cadre est à base d'un alliage de polyesters, tel qu'un alliage polyéthylène téréphtalate (PET) - polybutylène téréphtalate (PBT).

15. Module supérieur d'ouvrant (1) selon une des revendications 6 à 14, **caractérisé en ce que** le vitrage (2) est monté pivotant autour d'un axe longitudinal de l'ouvrant, la base inférieure de ce vitrage étant pourvue d'un système de raccordement (15) à un dispositif de lève-vitre (16) comportant deux liaisons mécaniques (M et M') superposées et reliées entre elles par une articulation souple (A).

## Claims

1. Method of manufacturing an opening leaf upper module (1) intended to be mounted around the periphery of a glass panel (2) of a vehicle, particularly a sliding side window glass panel of a motor vehicle, this module comprising a molded frame (3) based on at least one thermoplastic polymer and a molded weather strip (4) secured to said frame and based on at least one elastomer, **characterized in that** it comprises a molding step performed by multiple-shot injection molding in a moving-platen mold, for example a sliding-platen mold, or alternatively implemented using transfer molding, of materials intended to form said frame and said strip which are injected in turn, said elastomer being a thermoplastic elastomer (TPE) compatible with said thermoplastic polymer, so as to obtain this module formed as a single piece in which said molded frame is hollowed out over its entire length.

2. Method according to claim 1, the module (1) being designed to receive the glass panel (2) in a movable way in said frame (3), **characterized in that** said strip (4) comprises a wiping lip (8) that wipes the glass panel and an interface lip (9) that interfaces with the bodywork (10) of the vehicle to seal the opening leaf with respect to this bodywork.

3. Method according to claim 1 or 2, **characterized in that**, immediately after injecting the material that is intended to form said frame, this injected frame (3) is hollowed out by injecting through it liquid water or a gas under pressure and at a temperature lower than the temperature at which the material of the frame was injected, so as to form a hollow (3b) at its center by peripherally compacting this material.

4. Method according to one of the preceding claims, said frame (3) essentially having two substantially vertical portions, a front one (5) and a rear one (6), which are connected to one another by a substantially horizontal upper portion (7) and between which portions the glass panel (2) is slidably mounted toward or away from said upper portion, **characterized in that** the multiple-shot injection molding step comprises the formation of a glass panel guide track (11, 12) sliding in each of said front and rear portions, and **in that**, following this molding step, glass panel guide means (13, 14) which are fixed to an interior face of this glass panel are inserted into these tracks and are slidably mounted in the corresponding track so as to provide axially offset guidance for the glass panel as it slides in said frame.

5. Method according to one of the preceding claims, **characterized in that** it further comprises connecting said opening leaf upper module (1) to a lower module of this opening leaf that is intended to lie below the glass panel (2), for example by beforehand overmolding metal inserts of which this lower module is formed with the injected materials of said frame (3) and of said strip (4) that are intended to form said upper module.

6. Opening leaf upper module (1) intended to be mounted at the periphery of a glass panel (2) of a vehicle, particularly a sliding side window glass panel of a motor vehicle, this module comprising a molded frame (3) based on at least one thermoplastic polymer and a molded weather strip (4) secured to said frame and based on at least one elastomer, **characterized in that** said module is molded by multiple-shot injection molding of materials of which said frame and said strip are formed, in which said elastomer is a thermoplastic elastomer (TPE) compatible with said thermoplastic polymer, so as to obtain this module formed as a single piece, said frame (3) having a longitudinal hollow (3b) giving it a hollow structure over its entire length.

7. Opening leaf upper module (1) according to claim 6, the module being designed to movably receive the glass panel (2) in said frame (3), **characterized in that** said strip (4) comprises a continuous wiping lip (8) for wiping the glass panel, and an interface lip (9) for interfacing with the bodywork (10) of the vehicle to seal the opening leaf with respect to this bodywork.

8. Opening leaf upper module (1) according to claim 6 or 7 and incorporating the glass panel (2), said frame (3) essentially having two substantially vertical portions, one front (5) and one rear (6), which are joined together by a substantially horizontal upper portion (7) and between which the glass panel is slidably mounted toward or away from said upper portion, **characterized in that** a guide track (11, 12) for guiding the sliding glass panel is formed in each of said front and rear portions, and **in that** glass panel guide means (13, 14) which are fixed to an interior face of this glass panel are slidably mounted in each of these tracks in order to provide axially offset guidance of the glass panel in said frame as it slides.

9. Opening leaf upper module (1) according to claim 8, **characterized in that** each guide track (11, 12) has a U-shaped cross section, said offset-guidance means (13 and 14) comprising shoes of substantially inverted U-shaped cross section with one branch (13a, 14a) slideably mounted in the corresponding track (11, 12) and the other branch (13b, 14b) bonded via its external face to the glass panel (2).

10. Opening leaf upper module (1) according to claims 7 and 9, **characterized in that** said tracks (11 and 12) and said offset-guidance means (13 and 14) are designed in such a way that the glass panel (2), when sliding towards said upper portion (7) of said frame (3), does not come into contact with said wiping lip (8) until it comes into the immediate vicinity of this upper portion or butts against the latter at the end of sliding.

11. Opening leaf upper module (1) according to one of claims 6 to 10, **characterized in that** said weather strip (4) has no reinforcing member.

12. Opening leaf upper module (1) according to one of claims 6 to 11 and incorporating the glass panel (2), **characterized in that** said frame (3) is entirely fitted from one and the same side of the glass panel (2) that corresponds to the inside thereof, so that this frame is invisible from the outside of the vehicle equipped with this module.

13. Opening leaf upper module (1) according to one of claims 6 to 12, **characterized in that** said thermoplastic elastomer is chosen from the group consisting of thermoplastic vulcanizates (TPV) and styrene block copolymers (TPS).

14. Opening leaf upper module (1) according to one of claims 6 to 13, **characterized in that** said frame is based on an alloy of polyesters, such as an alloy of polyethylene terephthalate (PET) with polybutylene terephthalate (PBT).

15. Opening leaf upper module (1) according to one of claims 6 to 14, **characterized in that** the glass panel (2) is pivotally mounted about a longitudinal axis of the opening leaf, the lower base of this glass panel being provided with a connecting system (15) for connection to a glass panel lifter device (16) comprising two superposed mechanical links (M and M') joined together by a flexible articulation (A).

## Patentansprüche

1. Herstellungsverfahren für ein oberes Modul eines Öffnungsflügels (1), das dazu bestimmt ist, am Umfang eines Fensters (2) eines Fahrzeugs montiert zu werden, insbesondere eines Seitenschiebefensters eines Kraftfahrzeugs, wobei dieses Modul einen Rahmen (3), der auf der Grundlage eines Thermoplastpolymers geformt ist, und eine Dichtung (4), die fest verbunden mit dem Rahmen und auf der Grundlage von zumindest einem Elastomer geformt ist, aufweist, **dadurch gekennzeichnet, dass** dieses einen Formschritt aufweist, der durch Mehrfacheinspritzen in eine Form mit freiaufliegender Platte, beispielsweise mit Schiebeplatte, umgesetzt wird, oder über Pressspritzen umgesetzt wird, und zwar von Materialien, die dazu bestimmt sind, den Rahmen und die Dichtung zu bilden, und die aufeinanderfolgend eingespritzt werden, wobei das Elastomer ein Thermoplast-Elastomer (TPE) ist, das mit dem Thermoplastpolymer verträglich ist, um dieses Modul zu erhalten, das aus einem einzelnen Träger gebildet ist, in dem der geformte Rahmen über seine gesamte Länge ausgespart ist.

2. Verfahren nach Anspruch 1, wobei das Modul (1) angepasst ist, das Fenster (2) mobil in dem Rahmen (3) aufzunehmen, **dadurch gekennzeichnet, dass** die Dichtung (4) eines Dichtlippe (8) des Fensters und eine Grenzflächenlippe (9) mit der der Karosserie (10) des Fahrzeugs, die die Dichtheit des Öffnungsflügels mit der Karosserie sicherstellt, aufweist.

3. Verfahren nach Anspruch 1 oder 2, **dadurch gekennzeichnet, dass** unmittelbar nach dem Einspritzen von Material, das zum Ausbilden des Rahmens bestimmt ist, dieser gespritzte Rahmen (3) über das Einspritzen durch diesen von flüssigem Wasser oder von Gas unter Druck und mit einer Temperatur, die kleiner als die des Einspritzens von Material des Rahmen ist, ausgespart wird, um in seinem Zentrum durch Umfangsverdichtung von diesem Material eine Aussparung (3b) auszubilden.

4. Verfahren nach einem der vorhergehenden Ansprüche, wobei der Rahmen (3) im Wesentlichen zwei Abschnitte, einen vorderen Abschnitt (5) und einen hinteren Abschnitt (6), aufweist, die im Wesentlichen vertikal verlaufen und die miteinander durch einen im Wesentlichen horizontalen, oberen Abschnitt (7) verbunden sind und zwischen denen das Fenster (2) in Richtung von oder sich entfernend von dem oberen Abschnitt gleitend montiert ist, **dadurch gekennzeichnet, dass** der Formschritt durch Mehrfacheinspritzen das Ausbilden einer Führungsbahn (11, 12) des Schiebefensters in jedem der Abschnitte, vorderer und hinterer Abschnitt, aufweist und dass im Anschluss an den Formschritt in diese Bahnen Führungseinrichtungen (13, 14) des Fensters eingeführt werden, die an einer Innenfläche von letztgenanntem befestigt werden und die in der entsprechenden Bahn gleitend montiert sind, um bei dem Gleiten des Fensters im Rahmen eine axial verschobene Führung des Fensters abzusichern.

5. Verfahren nach einem der vorhergehenden Ansprüche, **dadurch gekennzeichnet, dass** dieses ferner eine Verbindung des oberen Moduls des Öffnungsflügels (1) mit einem unteren Modul dieses Öffnungsflügels aufweist, das dazu bestimmt ist, unterhalb des Fensters (2) angeordnet zu sein, beispielsweise durch vorheriges Abformen von Metalleinsätzen, die dieses untere Modul bilden, durch eingespritzte Materialien des Rahmens (3) und der Dichtung (4), die dazu bestimmt sind, das obere Modul zu bilden.

6. Oberes Modul eines Öffnungsflügels (1), das dazu bestimmt ist, am Umfang des Fensters (2) eines Fahrzeugs montiert zu werden, insbesondere eines Seitenschiebefensters eines Kraftfahrzeugs, wobei dieses Modul einen Rahmen (3), der auf der Grundlage eines Thermoplastpolymers geformt ist, und eine Dichtung (4), die fest verbunden mit dem Rahmen und auf der Grundlage von zumindest einem Elastomer geformt ist, aufweist, **dadurch gekennzeichnet, dass** dieses Modul durch Mehrfacheinspritzen von Materialien, die den Rahmen und die Dichtung bilden, geformt wird, wobei das Elastomer ein Thermoplast-Elastomer (TPE) ist, das mit dem Thermoplastpolymer verträglich ist, um dieses Modul zu erhalten, das aus einem einzelnen Träger gebildet ist, wobei der Rahmen eine Längsaussparung (3b) aufweist, die diesem eine Hohlstruktur verleiht, und zwar über seine gesamte Länge.

7. Oberes Modul eines Öffnungsflügels (1) nach Anspruch 6, wobei das Modul (1) angepasst ist, das Fenster (2) mobil in dem Rahmen (3) aufzunehmen, **dadurch gekennzeichnet, dass** die Dichtung (4) eines Dichtlippe (8) des Fensters und eine Grenzflächenlippe (9) mit der der Karosserie (10) des Fahrzeugs, die die Dichtheit des Öffnungsflügels mit der Karosserie sicherstellt, aufweist.

8. Oberes Modul eines Öffnungsflügels (1) nach Anspruch 6 oder 7, das das Fenster (2) aufnimmt, wobei der Rahmen (3) im Wesentlichen zwei Abschnitte, einen vorderen Abschnitt (5) und einen hinteren Abschnitt (6) aufweist, die im Wesentlichen vertikal verlaufen und die miteinander durch einen im Wesentlichen horizontalen, oberen Abschnitt (7) verbunden sind und zwischen denen das Fenster (2) in die Richtung von oder sich entfernend von dem oberen Abschnitt gleitend montiert ist, **dadurch gekennzeichnet, dass** eine Führungsbahn (11, 12) des Schiebefensters in jedem der Abschnitte, vorderer und hinterer Abschnitt, ausgebildet ist und dass in jeder dieser Bahnen die Führungseinrichtungen (13, 14) des Fensters gleitend montiert sind, die an einer Innenfläche von letztgenanntem befestigt sind, um bei dem Gleiten des Fensters im Rahmen eine axial verschobene Führung des Fensters abzusichern.

9. Oberes Modul eines Öffnungsflügels (1) nach Anspruch 8, **dadurch gekennzeichnet, dass** die Führungsbahn (11, 12) einen Querschnitt in U-Form aufweist, wobei die verschobenen Führungseinrichtungen (13 und 14) Gleitschuhe mit einem Querschnitt im Wesentlichen in Form eines umgekehrten U aufweisen, dessen einer Schenkel (13a, 14a) gleitend in der entsprechenden Bahn (11, 12) montiert ist und dessen anderer Schenkel (13b, 14b) über seine Außenfläche auf das Fenster (2) geklebt ist.

10. Oberes Modul eines Öffnungsflügels (1) nach den Ansprüchen 7 und 9, **dadurch gekennzeichnet, dass** die Bahnen (11 und 12) und die verschobenen Führungseinrichtungen (13 und 14) in der Weise angeordnet sind, dass das Fenster (2) bei seinem Gleiten zum oberen Abschnitt (7) des Rahmens (3) hin nur in Kontakt mit der Dichtlippe (8) tritt, wenn dieses in die unmittelbare Nähe dieses oberen Abschnitts gelangt oder gegen den letztgenannten am Ende des Gleitens stößt.

11. Oberes Modul eines Öffnüngsflügels (1) nach einem der Ansprüche 6 bis 10, **dadurch gekennzeichnet, dass** die Dichtung (4) mit einer Verstärkung versehen ist.

12. Oberes Modul eines Öffnungsflügels (1) nach einem der Ansprüche 6 bis 11, das das Fenster (2) aufnimmt, **dadurch gekennzeichnet, dass** der Rahmen (3) vollständig von der gleichen Seite des Fenster (2), die dem Inneren von letztgenanntem entspricht, in einer solchen Weise montiert ist, dass der Rahmen vom Äußeren des Fahrzeugs, das mit diesem Modul ausgerüstet ist, unsichtbar ist.

13. Oberes Modul eines Öffnungsflügels (1) nach einem der Ansprüche 6 bis 12, **dadurch gekennzeichnet, dass** das thermoplastische Elastomer aus der Gruppe ausgewählt wurde, die durch thermplastische Vulkanisate (TPV) und Styren-Blockkopolymere (TPS) gebildet ist.

14. Oberes Modul eines Öffnungsflügels (1) nach einem der Ansprüche 6 bis 13, **dadurch gekennzeichnet, dass** der Rahmen auf einer Polyesterverbindung basiert, wie z.B. Polyethlyen-Terephthalat (PET)-Polybutylen-Terephthalat (PBT).

15. Oberes Modul eines Öffnungsflügels (1) nach einem der Ansprüche 6 bis 14, **dadurch gekennzeichnet, dass** das Fenster (2) um eine Längsachse des Öffnungsflügels schwenkbar montiert ist, wobei das untere Grundbauteil von diesem Fenster mit einem Anschlusssystem (15) mit Fensterhebevorrichtung (16) versehen ist, das zwei übereinander angeordnete mechanische Verbindungen (M und M') aufweist, die untereinander durch ein biegsames Gelenk (A) verbunden sind.
